# EUROPEAN PATENT SPECIFICATION

(11) **EP 3 277 057 B1**
(45) Date of publication and mention of the grant of the patent: **26.02.2020**
(21) Application number: 15886086.6
(22) Date of filing: 30.10.2015
(51) Int. Cl.: H05B 37/02, H05B 33/08, G08B 5/36

(54) **LIGHT EMISSION CONTROL METHOD AND DEVICE**
VERFAHREN UND VORRICHTUNG ZUR LICHTEMISSIONSSTEUERUNG
PROCÉDÉ ET DISPOSITIF DE COMMANDE D'ÉMISSION DE LUMIÈRE

(30) Priority: 25.03.2015 CN 201510132328
(43) Date of publication of application: 31.01.2018
(73) Proprietor: Xiaomi Inc., Beijing 100085 (CN)
(72) Inventor: LIU, Lin, Beijing 100085 (CN); DU, Hui, Beijing 100085 (CN); FENG, Jingmin, Beijing 100085 (CN)
(74) Representative: Cabinet Beau de Loménie
(86) International application number: PCT/CN2015/093411
(87) International publication number: WO 2016/150164

(56) References cited:
- CN-A- 101 025 881
- CN-A- 104 390 181
- CN-A- 104 812 127
- JP-A- 2004 022 646
- JP-A- 2004 299 506
- US-A1- 2009 231 313
- US-A1- 2011 050 663
- US-A1- 2011 310 073

## Description

### TECHNICAL FIELD

The present invention generally relates to the field of display control technology, and in particularly, to a method and a device for controlling luminescence.

### BACKGROUND

A terminal, such as a mobile phone, a tablet computer and a multimedia player is normally provided with a message indicator composed of a light emitting diode. Such message indicator may be used to indicate a residual battery capacity, an incoming call, an incoming message, and the like.

In the prior technology, the message indicator is arranged on the terminal, and the message indicator has a luminescence parameter being a constant value. The luminescence parameter includes, but is not limited to, brightness and color temperature. Taking the brightness as an example, the message indicator seems too bright under environment with lower brightness, while appears too dark under environment with higher brightness, resulting from the brightness of the message indicator being a constant value. Therefore, in the prior technology, there exists a problem of inappropriate luminescence of the message indicator caused by the brightness of the message indicator being of a constant value.

US2009/0231313A1 relates to a display apparatus and an electronic apparatus. The display apparatus includes a display element section for displaying an image in an image display region, a light detection sensor for detecting the intensity of light in the image display region or in the proximity of the image display region, and a light control circuit for controlling the luminance when the display element section displays an image based on a result of the detection by the light detection sensor.

### SUMMARY

The invention relates to a method for controlling luminescence according to claim 1 and a device for controlling luminescence according to claim 7. Further aspects of the invention are included in the dependent claims.

Accordingly, the present invention provides a method and a device for controlling luminescence. The technical solutions are shown as below.

According to a first aspect of embodiments of the present invention, there is provided a method for controlling luminescence, including:
acquiring an environmental brightness;
determining a luminescence parameter of a message indicator arranged on a terminal based on the environmental brightness; and
controlling the message indicator to illuminate based on the luminescence parameter.

Optionally, the step of determining a luminescence parameter of a message indicator arranged on a terminal based on the environmental brightness includes: determining a brightness of the message indicator based on the environmental brightness.

Optionally, the step of determining a brightness of the message indicator based on the environmental brightness includes:
determining a screen brightness of the terminal based on the environmental brightness; and
determining the brightness of the message indicator based on the screen brightness, in which the screen brightness is in proportion with the brightness of the message indicator.

Optionally, the step of determining a luminescence parameter of a message indicator arranged on a terminal based on the environmental brightness includes: determining a color temperature of the message indicator based on the environmental brightness.

Optionally, the step of determining a color temperature of the message indicator based on the environmental brightness includes:
determining a color temperature corresponding to the environmental brightness based on a first predetermined correspondence including a correspondence between the environmental brightness and the color temperature;
or
acquiring a brightness range of the environmental brightness; and
determining a color temperature corresponding to the brightness range based on a second predetermined correspondence including a correspondence between the brightness range and the color temperature.

Optionally, the method further includes:
determining whether the message indicator is in conformity with a predetermined luminescence condition, if a condition for triggering the message indicator to illuminate is met, in which the predetermined luminescence condition refers to a predetermined condition allowing the message indicator to illuminate;
controlling the message indicator not to illuminate if the message indicator is not in conformity with the predetermined luminescence condition; and
controlling the message indicator to illuminate based on the luminescence parameter if the message indicator is in conformity with the predetermined luminescence condition.

Optionally, the predetermined luminescence condition includes at least one of
a side at which the message indicator is located is not facing down; and
a current moment belongs to a predetermined luminescence period,
in which the predetermined luminescence period refers to a predetermined period allowing the message indicator to illuminate.

Optionally, the message indicator is a blinking light or a flash light arranged on the terminal.

According to a second aspect of embodiments of the present invention, there is provided a device for controlling luminescence, including:
a brightness acquiring module, configured to acquire an environmental brightness;
a parameter determining module, configured to determine a luminescence parameter of a message indicator arranged on a terminal based on the environmental brightness; and
a first control module, configured to control the message indicator to illuminate based on the luminescence parameter.

Optionally, the parameter determining module includes: a brightness determining sub-module, configured to determine a brightness of the message indicator based on the environmental brightness.

Optionally, the brightness determining sub-module includes:
a first brightness determining sub-module, configured to determine a screen brightness of the terminal based on the environmental brightness; and
a second brightness determining sub-module, configured to determine the brightness of the message indicator based on the screen brightness,
in which the screen brightness is in proportion with the brightness of the message indicator.

Optionally, the parameter determining module includes:
a color temperature determining sub-module, configured to determine a color temperature of the message indicator based on the environmental brightness.

Optionally, the color temperature determining sub-module includes:
a first color temperature determining sub-module, configured to determine a color temperature corresponding to the environmental brightness based on a first predetermined correspondence including a correspondence between the environmental brightness and the color temperature;
a brightness range acquiring sub-module, configured to acquire a brightness range of the environmental brightness; and
a second color temperature determining sub-module, configured to determine a color temperature corresponding to the brightness range based on a second predetermined correspondence including a correspondence between the brightness range and the color temperature.

Optionally, the device further includes:
a condition determining module, configured to determine whether the message indicator is in conformity with a predetermined luminescence condition, if a condition for triggering the message indicator to illuminate is met, in which the predetermined luminescence condition refers to a predetermined condition allowing the message indicator to illuminate; and
a second control module, configured to control the message indicator not to illuminate if the message indicator is not in conformity with the predetermined luminescence condition;
in which the first control module is further configured to control the message indicator to illuminate based on the luminescence parameter if the message indicator is in conformity with the predetermined luminescence condition.

Optionally, the predetermined luminescence condition includes at least one of:
a side at which the message indicator is located is not facing down; and
a current moment belongs to a predetermined luminescence period,
in which the predetermined luminescence period refers to a predetermined period allowing the message indicator to illuminate.

Optionally, the message indicator is a blinking light or a flash light arranged on the terminal.

According to a third aspect of embodiments of the present invention, there is provided a device for controlling luminescence, including:
a processor; and
a memory for storing instructions executable by the processor,
in which the processor is configured to
acquire an environmental brightness;
determine a luminescence parameter of a message indicator arranged on a terminal based on the environmental brightness; and
control the message indicator to illuminate based on the luminescence parameter.

The technical solution provided in embodiments of the present invention may have the following advantageous effect. By means of acquiring the current environmental brightness and then adjusting the luminescence parameter of the message indicator based on the environmental brightness, the technical solution provided in embodiments of the present invention solves a problem of inappropriate luminescence of the message indicator resulting from the luminescence parameter of the message indicator of the terminal being a constant value in the prior art, allows the luminescence parameter of the message indicator to be dynamically adjusted based on the environmental brightness, so that the luminescence of the message indicator is matched with the environmental brightness, and thereby optimizes the luminescence of the message indicator under different cases and thus improves the user's experience.

It would be appreciated that the above general description and the following detailed description are merely for illustration and explanation, without intending to limit the present invention.

### BRIEF DESCRIPTION OF THE DRAWINGS

The accompanying drawings, which are incorporated in and constitute a part of this specification, illustrate embodiments consistent with the present invention and, together with the description, serve to explain the principles of the present invention.
Fig. 1 is a flow chart showing a method for controlling luminescence according to an illustrative embodiment of the present invention;
Fig. 2 is a flow chart showing a method for controlling luminescence according to another illustrative embodiment of the present invention;
Fig. 3 is a flow chart showing a method for controlling luminescence according to a further illustrative embodiment of the present invention;
Fig. 4 is a flow chart showing a method for controlling luminescence according to a still further illustrative embodiment of the present invention;
Fig. 5 is a block diagram showing a device for controlling luminescence according to an illustrative embodiment of the present invention;
Fig. 6 is a block diagram showing a device for controlling luminescence according to another illustrative embodiment of the present invention; and
Fig. 7 is a block diagram showing a device according to an illustrative embodiment of the present invention.

Specific embodiments of the present invention have been shown by the above drawings, which will be described in detail hereinafter. These drawings and descriptions are for illustrating concept of the present invention for those skilled in the art by referring particular embodiments, other than intended to limit the conception scope of the present invention by any means.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the invention as recited in the appended claims.

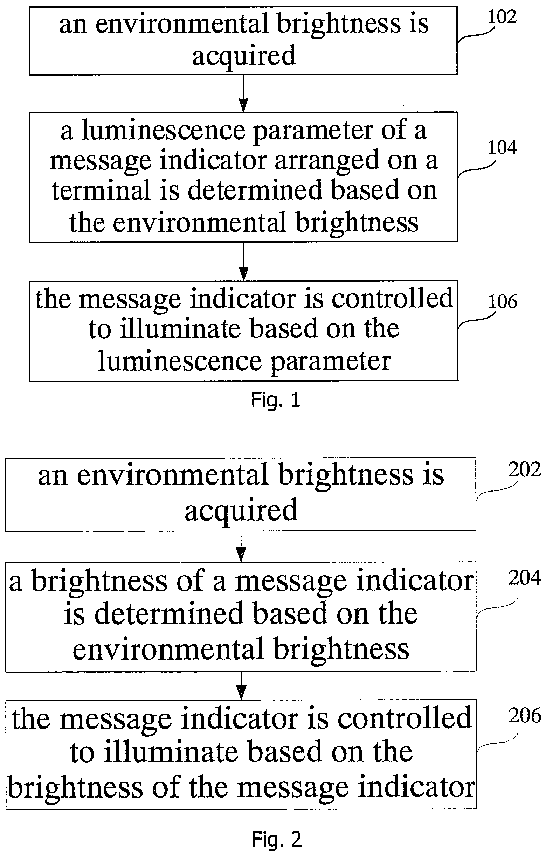

Fig. 1 is a flow chart showing a method for controlling luminescence according to an illustrative embodiment of the present invention. This embodiment gives an example of performing the method for controlling luminescence in a terminal such as a mobile phone, a tablet computer, and a personal digital assistant. This method for controlling luminescence may include the following steps.

In Step 102, an environmental brightness is acquired.

The terminal is provided with a light sensor, by which the current environmental brightness is acquired.

Besides, in this embodiment, there is no limitation on the timing of acquiring the environmental brightness. For example, the environmental brightness may be acquired by the terminal in real-time, or at intervals of a predetermined period, or prior to controlling the message indicator arranged on the terminal to illuminate, etc.

In step 104, a luminescence parameter of a message indicator arranged on a terminal is determined based on the environmental brightness.

The luminescence parameter includes, but is not limited to brightness and color temperature.

After the environmental brightness is acquired by the terminal, the luminescence parameter of the message indicator may be obtained by calculating with a predetermined algorithm and on basis of the environmental brightness. Otherwise, a correspondence between different environmental brightnesses and different luminescence parameters may be stored in a terminal in advance, and after the environmental brightness is acquired by the terminal, the luminescence parameter of the message indicator may be determined by inquiring the pre-stored correspondence.

In step 106, the message indicator is controlled to illuminate based on the luminescence parameter.

The message indicator is dynamically controlled to illuminate by the terminal based on the luminescence parameter, so that luminance of the message indicator is matched with the current environmental brightness.

Optionally, the message indicator is a blinking light or a flash light arranged on the terminal. The message indicator is used to emit a visual reminder to users. For example, the message indicator may be used to emit a visual reminder when the terminal has a residual battery capacity lower than a predetermined value, or to emit a visual reminder in the case of an incoming call, an incoming message, or a push notification. The message indicator may be arranged on a screen side or non-screen side of the terminal. For example, the message indicator may be arranged on a rear-housing or side-housing of the terminal. Alternatively, the message indicator may be composed of a light-emitting diode (LED).

In an example, it is assumed that the screen side of the terminal is provided with a blinking light, and the non-screen side of the terminal is provided with a flash light. When the terminal receives an incoming call, the terminal firstly detects whether the screen is blocked. In the case that the screen is not blocked, the terminal determines a luminescence parameter of the blinking light based on the current environmental brightness and controls the blinking light to illuminate based on the luminescence parameter of the blinking light. In the case that the screen is blocked, the terminal determines a luminescence parameter of the flash light based on the current environmental brightness and controls the flash light to illuminate based on the luminescence parameter of the flash light, so that it may be able to send a reminder to the user in the case that the screen and the blinking light of the terminal are blocked.

In conclusion, by means of acquiring the current environmental brightness and then adjusting the luminescence parameter of the message indicator based on the environmental brightness, the method for controlling luminescence provided in the present embodiment solves a problem of inappropriate luminescence of the message indicator resulting from the luminescence parameter of the message indicator of the terminal being a constant value in the prior art, allows the luminescence parameter of the message indicator to be dynamically adjusted based on the environmental brightness, so that the luminescence of the message indicator is matched with the environmental brightness, and thereby optimizes the luminescence of the message indicator under different cases and thus improves the user's experience.

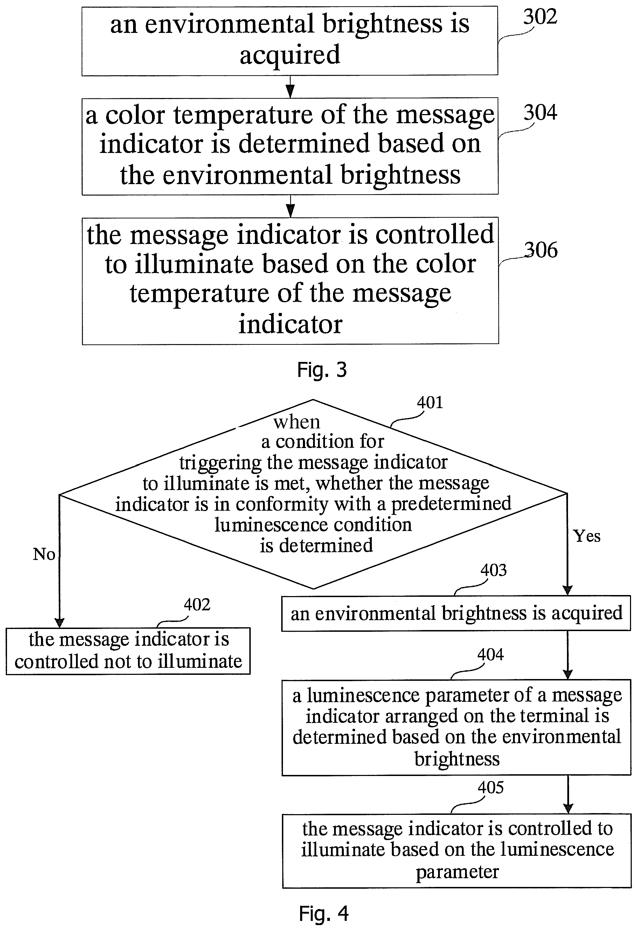

Examples of controlling the brightness and the color temperature of the message indicator based on the environmental brightness are illustrated in embodiments, as shown in Figs. 2 and 3, respectively.

Fig. 2 is a flow chart showing a method for controlling luminescence according to another illustrative embodiment of the present invention. This embodiment gives an example of performing the method for controlling luminescence in a terminal such as a mobile phone, a tablet computer, and a personal digital assistant. This method for controlling luminescence may include the following steps.

In step 202, an environmental brightness is acquired.

The terminal is provided with a light sensor, by which the current environmental brightness is acquired.

Besides, in this embodiment, there is no limitation on the timing of acquiring the environmental brightness. For example, the environmental brightness may be acquired by the terminal in real-time, or at intervals of a predetermined period, or prior to controlling the message indicator arranged on the terminal to illuminate, etc.

In step 204, a brightness of a message indicator is determined based on the environmental brightness.

After the environmental brightness is acquired by the terminal, the brightness of the message indicator may be obtained by calculating with a predetermined algorithm and on basis of the environmental brightness. Otherwise, a correspondence between different environmental brightnesses and different brightnesses of the message indicator may be stored in a terminal in advance, and after the environmental brightness is acquired by the terminal, the brightness of the message indicator may be determined by inquiring the pre-stored correspondence. The environmental brightness is in proportion with the brightness of the message indicator. The higher the environmental brightness, the higher the brightness of the message indicator; otherwise, the lower the environmental brightness, the lower the brightness of the message indicator.

In an exemplary embodiment, the screen brightness of the terminal may be firstly determined by the terminal based on the environmental brightness, and then the brightness of the message indicator may be determined based on the screen brightness. The screen brightness is in proportion with the brightness of the message indicator. Alternatively, the terminal may control the screen to display based on the screen brightness.

In step 206, the message indicator is controlled to illuminate based on the brightness of the message indicator.

The message indicator is controlled to illuminate by the terminal based on the brightness of the message indicator, so that the brightness of the message indicator is matched with the current environmental brightness.

Optionally, the message indicator is a blinking light or a flash light arranged on the terminal. The message indicator is used to emit a visual reminder to users. For example, the message indicator may be used to indicate a message such as a residual battery capacity, an incoming call, an incoming message, or a push notification. The message indicator may be arranged on a screen side or non-screen side of the terminal. For example, the message indicator may be arranged on a rear-housing or side-housing of the terminal. Alternatively, the message indicator may be composed of a light-emitting diode (LED).

In conclusion, by means of acquiring the current environmental brightness and then adjusting the brightness of the message indicator based on the environmental brightness, the method for controlling luminescence provided in the present embodiment solves a problem of inappropriate luminescence of the message indicator resulting from the brightness of the message indicator of the terminal being a constant value in the prior art, allows the brightness of the message indicator to be dynamically adjusted based on the environmental brightness, so that the brightness of the message indicator is matched with the environmental brightness, and thereby optimizes the luminescence of the message indicator under different cases and thus improves the user's experience.

Besides, by adjusting the screen brightness based on the environmental brightness dynamically, the environmental brightness, the screen brightness and the brightness of the message indicator are matched one another, and further the terminal may display optimal screen brightness and optimal brightness of the message indicator for the user under different cases, and thereby improving the user's experience sufficiently.

Fig. 3 is a flow chart showing a method for controlling luminescence according to a further illustrative embodiment of the present invention. This embodiment gives an example of performing the method for controlling luminescence in a terminal such as a mobile phone, a tablet computer, and a personal digital assistant. This method for controlling luminescence may include the following steps.

In step 302, an environmental brightness is acquired.

The terminal is provided with a light sensor, by which the current environmental brightness is acquired.

Besides, in this embodiment, there is no limitation on the timing of acquiring the environmental brightness. For example, the environmental brightness may be acquired by the terminal in real-time, or at intervals of a predetermined period, or prior to controlling the message indicator arranged on the terminal to illuminate, etc.

In step 304, a color temperature of the message indicator is determined based on the environmental brightness.

As compared with the embodiment shown as Fig. 2, a difference of the present embodiment lies in that the color temperature of the message indicator is determined by the terminal based on the environmental brightness. The color temperature is a physical quantity representing a light color of a light source in a unit of Kelvin (K). Different color temperatures bring users different subjective visual perceptions. In general, light with a color temperature lower than 3300 K is in a reddish color, which brings users a warm subjective visual perception, light with a color temperature between 3300 K and 6000 K is in a white color, which brings users a refreshing subjective visual perception, and light with a color temperature higher than 6000 K is in a blue color, which brings users a chilly subjective visual perception.

As a result, whether the color temperature is matched with the environmental brightness will directly affect the user's subjective visual perception. By way of examples, in environment with a low environmental brightness, if the color temperature of the light source is too high and the light color is in a blue color, then it brings the user a bleak subjective visual perception, and in the environment with a high environmental brightness, if the color temperature of the light source is too low and in a reddish color, then it brings the user a sultry subjective visual perception.

In the present invention, the color temperature of the message indicator is determined by the terminal based on the current environmental brightness, so that the color temperature of the message indicator is matched with the environmental brightness. By way of examples, a low environmental brightness results in a low color temperature, so that the message indicator is of a reddish light color, thereby bringing users the warmer subjective visual perception, and a high environmental brightness results in a high color temperature, so that the message indicator is of a blue color, thereby bringing users the refreshing subjective visual perception.

In addition, the present step may include the following exemplary embodiments. In one exemplary embodiment, the color temperature corresponding to the environmental brightness is determined by the terminal based on a first predetermined correspondence. Such first predetermined correspondence includes a correspondence between different environmental brightnesses and different color temperatures. In another exemplary embodiment, a brightness range of the environmental brightness is acquired by the terminal, and the color temperature corresponding to the brightness range is determined based on a second predetermined correspondence. Such second predetermined correspondence includes a correspondence between different brightness ranges and different color temperatures. Obviously, in other exemplary embodiments, the color temperature of the message indicator may also be calculated by the terminal on basis of the environmental brightness and by means of predetermined algorithms.

In step 306, the message indicator is controlled to illuminate based on the color temperature of the message indicator.

The message indicator is controlled to illuminate by the terminal based on the color temperature of the message indicator, so that the color temperature of the message indicator is matched with the current environmental brightness.

Optionally, the message indicator is a blinking light or a flash light arranged on the terminal. The message indicator is used to emit a visual reminder to users. For example, the message indicator may be used to indicate a message such as a residual battery capacity, an incoming call, an incoming message, and a push notification. The message indicator may be arranged on a screen side or non-screen side of the terminal. For example, the message indicator may be arranged on a rear-housing or side-housing of the terminal. Alternatively, the message indicator may be composed of a light-emitting diode (LED).

It should be noted that in other exemplary embodiments, the screen brightness may also be firstly determined by the terminal based on the environmental brightness, and the color temperature of the message indicator is then determined based on the screen brightness, so that the color temperature of the message indicator is matched with the screen brightness. This part is a conceivable content for those skilled in the art based on embodiments provided in the present invention, which is not repeated hereinafter.

In conclusion, by means of acquiring the current environmental brightness and then adjusting the color temperature of the message indicator based on the environmental brightness, the method for controlling luminescence provided in the present embodiment solves a problem of inappropriate luminescence of the message indicator resulting from the color temperature of the message indicator of the terminal being a constant value in the prior art, allows the color temperature of the message indicator to be dynamically adjusted based on the environmental brightness, so that the color temperature of the message indicator is matched with the environmental brightness, and thereby optimizes the luminescence of the message indicator under different cases and thus improves the user's experience.

It should also be noted that in practical application, after acquiring the current environmental brightness, the brightness and/or the color temperature of the message indictor may be adjusted by the terminal based on the environmental brightness, which is not limited in embodiments of the present disclosure.

Fig. 4 is a flow chart showing a method for controlling luminescence according to a still further illustrative embodiment of the present invention. This embodiment gives an example of performing the method for controlling luminescence in a terminal such as a mobile phone, a tablet computer, and a personal digital assistant. This method for controlling luminescence may include the following steps.

In step 401, if a condition for triggering the message indicator to illuminate is met, it is determined whether the message indicator is in conformity with a predetermined luminescence condition.

The message indicator is arranged on the terminal, for emitting a visual reminder to users. The conditions for triggering the message indicator to illuminate are different in accordance with different configuration requirements. For example, when the message indicator is used to indicate a residual battery capacity of the terminal, the condition for triggering the message indicator to illuminate may be the terminal being of a residual battery capacity lower than a predetermined value. For another example, when the message indicator is used to indicate an incoming call, an incoming message or a push notification, the condition for triggering the message indicator to illuminate may be the incoming call, the incoming message or the push notification being received.

In the present embodiment, when the condition for triggering the message indicator to illuminate is met, the terminal determines whether the message indicator is in conformity with the predetermined luminescence condition. Such predetermined luminescence condition refers to a predetermined condition allowing the message indicator to illuminate.

Optionally, the predetermined luminescence condition includes at least one of: a side at which the message indicator is located not facing down and a current moment is belonging to a predetermined luminescence period. The predetermined luminescence period refers to a predetermined period allowing the message indicator to illuminate.

In one exemplary embodiment, the predetermined luminescence condition being that the side at which the message indicator is located is not facing down is taken as an example.

In general, when the side at which the message indicator is located faces down, the message indicator is likely to be blocked, such that the user is unaware of the visual reminder, even emitted by the message indicator emitting light. Thus, in order to save power consumption of the mobile phone and reduce battery consumption, the message indicator is not allowed to illuminate when located at a side facing down. On the contrary, when the side at which the message indicator is located does not face down, i.e., the side at which the message indicator is located faces up or around, the message indicator is usually not blocked, such that the user may be aware of the visual reminder emitted by the message indicator. Thus, the message indicator is allowed to illuminate when it is located at a side not facing down.

Further, the terminal may determine whether the side at which the message indicator is located faces down with data collected by a built-in gravity sensor. After collecting a center-of-gravity position of the terminal, it may determine whether the terminal is in a vertical state, a horizontal state, a screen-facing up state, or a screen-facing down state, etc, on a basis of different center-of-gravity positions corresponding to different placing states of the terminal. Otherwise, the terminal may also determine whether the side at which the message indicator is located faces down with data collected by an optical sensor or a distance sensor. Taking the optical sensor as an example, it may be arranged on the same side with the message indicator, such that a value of light intensity in front of the message indicator may be collected by the optical sensor. In the case that the value of light intensity is lower than a predetermined threshold, it may determine that the message indicator is blocked or the side at which the message indicator is located faces down. The predetermined threshold may be a certain constant value close to zero, or may be a variable per different periods, for example, the predetermined threshold may be slightly higher during day time, and a little lower at night.

In an example, it is assumed that the predetermined luminescence condition is that the side at which the message indicator is located does not face down, and the condition for triggering the message indicator to illuminate is an incoming call being received. When receiving the incoming call, the terminal determines whether the side at which the message indicator is located faces down based on the center-of-gravity position collected by the built-in gravity sensor. If the side at which the message indicator is located does not face down, then it indicates that the message indicator is in conformity with the predetermined luminescence condition. If the side at which the message indicator is located faces down, then it indicates that the message indicator is not in conformity with the predetermined luminescence condition.

In another example, it is assumed that the terminal is provided with a blinking light at the screen side, and a flash light at the non-screen side. Under normal circumstances, the blinking light is taken as the message indicator for emitting the visual reminder to users. When receiving the incoming call, the terminal determines whether the side at which the blinking light is located (i.e., the screen side) faces down. If the side at which the blinking light is located does not face down, then the terminal controls the blinking light to illuminate via steps 403 to 405. If the side at which the blinking light is located faces down, then it indicates that the non-screen side at which the flash light is located does not face down, as such the terminal controls the flash light to illuminate via steps 403 to 405, instead of the blinking light. The terminal takes the flash light as a back-up message indicator. In the case that the blinking light is blocked, the unblocked flash light may be used to emit the visual reminder to users, so as to effectively emit the visual reminder to users regardless of how to place the terminal.

In another exemplary embodiment, the predetermined luminescence condition is the current moment belonging to the predetermined luminescence period.

Users may set a predetermined luminescence period for the message indicator as practical requirements. The message indicator is allowed to illuminate during the predetermined luminescence period, and otherwise, is not allowed to illuminate. For example, users may set a non-sleep period of 8:00 to 24:00 as the predetermined luminescence period, such that the message indicator is allowed to illuminate during the non-sleep period of 8:00 to 24:00 each day, while is not allowed to illuminate during the sleep period of 0:00 to 8:00 each day. When the condition for triggering the message indicator to illuminate is met, the terminal determines whether the current moment belongs to the predetermined luminescence period. If the current moment belongs to the predetermined luminescence period, it indicates that the message indicator is in conformity with the predetermined luminescence condition. For example, when receiving an incoming call at 10:00, the terminal determines that the message indicator is in conformity with the predetermined luminescence condition because 10:00 is within the predetermine luminescence period of 8:00 to 24:00. Furthermore, if the current moment does not belong to the predetermined luminescence period, it indicates that the message indicator is not in conformity with the predetermined luminescence condition. For example, when receiving an incoming call at 4:00, the terminal determines that the message indicator is not in conformity with the predetermined luminescence condition because 4:00 is beyond the predetermine luminescence period of 8:00 to 24:00.

It should be noted that, in practical application, the predetermined luminescence condition may include any one of the side at which the message indicator is located not facing down and the current moment belonging to the predetermined luminescence period. Alternatively, the predetermined luminescence condition may include both the side at which the message indicator is located not facing down and the current moment belonging to the predetermined luminescence period. For example, when receiving an incoming call, the terminal determines whether the side at which the message indicator is located faces down. If the terminal determines that the side at which the message indicator is located does not face down, the terminal further determines whether the current moment belongs to the predetermined luminescence period. Further, in the case that the current moment is determined belonging to the predetermined luminescence period, then the message indicator is determined being in conformity with the predetermined luminescence condition. As long as the message indicator is not in conformity with any one of the above two conditions, the message indicator is determined being not in conformity with the predetermined luminescence condition.

It should be also noted that, in the present invention, the predetermined luminescence condition including the side at which the message indicator is located not facing down and/or the current moment belonging to the predetermined luminescence period is merely taken as an example for illustration. In practical application, it may also set different predetermined luminescence conditions as practical requirements. For example, the predetermined luminescence condition may further include: the message indicator being not blocked, a residual battery capacity of the terminal being lower than a predetermined minimum value, etc.

Further, in the present embodiment, if the message indicator is not in conformity with the predetermined luminescence condition, then the following step 402 is performed; otherwise, if the message indicator is in conformity with the predetermined luminescence condition, then the following steps 403 to 405 are performed.

In step 402, the message indicator is controlled not to illuminate.

When the message indicator is not in conformity with the predetermined luminescence condition, the message indicator is controlled not to illuminate by the terminal. As a result, it may not only save power consumption of the mobile phone and reduce battery consumption, but also dynamically control the luminescence of the message indicator in accordance with user's configuration needs, thereby satisfying user's personalized needs and improving the use's experience.

In step 403, an environmental brightness is acquired.

In step 404, a luminescence parameter of a message indicator arranged on the terminal is determined based on the environmental brightness.

The luminescence parameter includes, but is not limited to, brightness and color temperature.

In step 405, the message indicator is controlled to illuminate based on the luminescence parameter.

When the message indicator is in conformity with the predetermined luminescence condition, the message indicator is controlled to illuminate by the terminal. Besides, the step of controlling the message indicator to illuminate by the terminal, i.e., the above steps 403 to 405 in embodiments as shown in Figs. 1 to 3, has been introduced and described in detail, which is not repeated herein.

In conclusion, when the condition for triggering the message indicator to illuminate is met, by means of determining whether the message indicator is in conformity with the predetermined luminescence condition and determining whether the message indicator is controlled to illuminate based on the determined result, the method for controlling luminescence provided in the present embodiment dynamically controls the luminescence of the message indicator in accordance with user's configuration needs, thereby satisfying user's personalized needs and improving the user's experience.

The following device embodiments of the present invention may be used to perform the method embodiments of the present invention. For details not disclosed in the device embodiments of the present invention, reference is made to the method embodiments of the present invention.

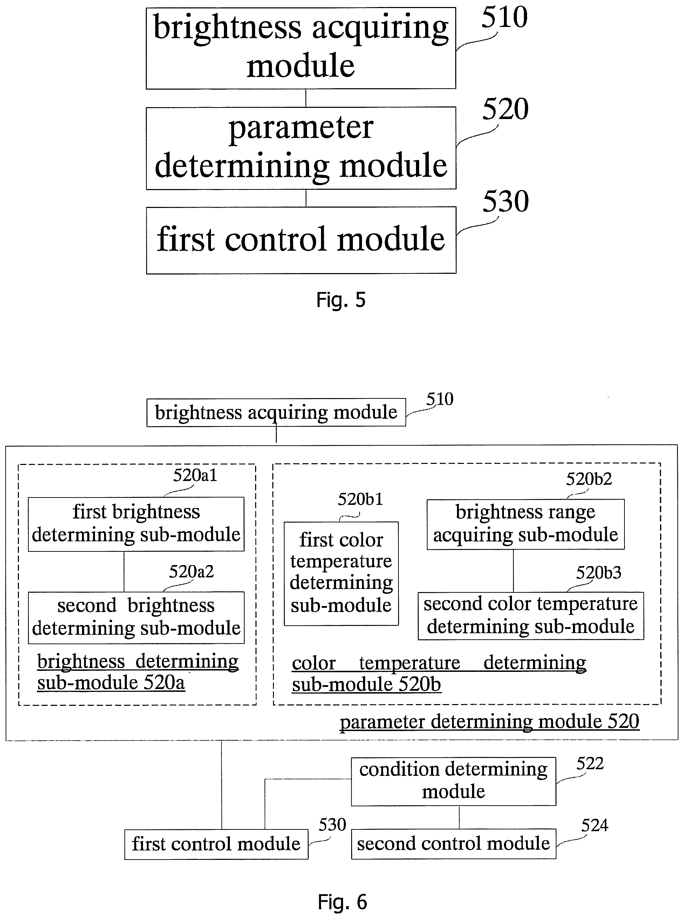

Fig. 5 is a block diagram showing a device for controlling luminescence according to an illustrative embodiment of the present invention. Such device for controlling luminescence may be a part or whole part of the terminal by software, hardware, or a combination thereof. Such device for controlling luminescence may include: a brightness acquiring module 510, a parameter determining module 520, and a first control module 530.

The brightness acquiring module 510 is configured to acquire an environmental brightness.

The parameter determining module 520 is configured to determine a luminescence parameter of a message indicator arranged on a terminal based on the environmental brightness.

The first control module 530 is configured to control the message indicator to illuminate based on the luminescence parameter.

In conclusion, by means of acquiring the current environmental brightness and then adjusting the luminescence parameter of the message indicator based on the environmental brightness, the device for controlling luminescence provided in the present embodiment solves a problem of inappropriate luminescence of the message indicator resulting from the luminescence parameter of the message indicator of the terminal being a constant value in the prior art, allows the luminescence parameter of the message indicator to be dynamically adjusted based on the environmental brightness, so that the luminescence of the message indicator is matched with the environmental brightness, and thereby optimizes the luminescence of the message indicator under different cases and thus improves the user's experience.

Fig. 6 is a block diagram showing a device for controlling luminescence according to another illustrative embodiment of the present invention. Such device for controlling luminescence may be a part or whole part of the terminal by software, hardware, or a combination thereof. Such device for controlling luminescence may include: a brightness acquiring module 510, a parameter determining module 520, and a first control module 530.

The brightness acquiring module 510 is configured to acquire an environmental brightness.

The parameter determining module 520 is configured to determine a luminescence parameter of a message indicator arranged on a terminal based on the environmental brightness.

The first control module 530 is configured to control the message indicator to illuminate based on the luminescence parameter.

Optionally, the parameter determining module 520 includes a brightness determining sub-module 520a.

The brightness determining sub-module 520a is configured to determine a brightness of the message indicator based on the environmental brightness.

Optionally, the brightness determining sub-module 520a includes a first brightness determining sub-module 520a1 and a second brightness determining sub-module 520a2.

The first brightness determining sub-module 520a1 is configured to determine a screen brightness of the terminal based on the environmental brightness.

The second brightness determining sub-module 520a2 is configured to determine the brightness of the message indicator based on the screen brightness.

The screen brightness is in proportion with the brightness of the message indicator.

Optionally, the parameter determining module 520 includes a color temperature determining sub-module 520b.

The color temperature determining sub-module 520b is configured to determine a color temperature of the message indicator based on the environmental brightness.

The color temperature determining sub-module 520b includes:
a first color temperature determining sub-module 520b1, configured to determine a color temperature corresponding to the environmental brightness based on a first predetermined correspondence including a correspondence between the environmental brightness and the color temperature.

Optionally, The color temperature determining sub-module 520b includes:
a brightness range acquiring sub-module 520b2, configured to acquire a brightness range of the environmental brightness; and
a second color temperature determining sub-module 502b3, configured to determine a color temperature corresponding to the brightness range based on a second predetermined correspondence including a correspondence between the brightness range and the color temperature.

Optionally, the device further includes: a condition determining module 522 and a second control module 524.

The condition determining module 522 is configured to determine whether the message indicator is in conformity with a predetermined luminescence condition, if a condition for triggering the message indicator to illuminate is met, the predetermined luminescence condition referring to a predetermined condition allowing the message indicator to illuminate.

The second control module 524 is configured to control the message indicator not to illuminate, in the case that the message indicator is not in conformity with the predetermined luminescence condition.

The first control module 530 is further configured to control the message indicator to illuminate based on the luminescence parameter, in the case that the message indicator is in conformity with the predetermined luminescence condition.

Optionally, the predetermined luminescence condition includes at least one of:
a side at which the message indicator is located not facing down; and
a current moment belonging to a predetermined luminescence period,
in which the predetermined luminescence period refers to a predetermined period allowing the message indicator to illuminate.

Optionally, the message indicator is a blinking light or a flash light arranged on the terminal.

In conclusion, by means of acquiring the current environmental brightness and then adjusting the luminescence parameter of the message indicator based on the environmental brightness, the device for controlling luminescence provided in the present embodiment solves a problem of inappropriate luminescence of the message indicator resulting from the luminescence parameter of the message indicator of the terminal being a constant value in the prior art, allows the luminescence parameter of the message indicator to be dynamically adjusted based on the environmental brightness, so that the luminescence of the message indicator is matched with the environmental brightness, and thereby optimizes the luminescence of the message indicator under different cases and thus improves the user's experience.

For the device in the above-mentioned embodiments, specific operative modes executed by each module have been described in detail in method embodiments of the present invention, which is not repeated herein.

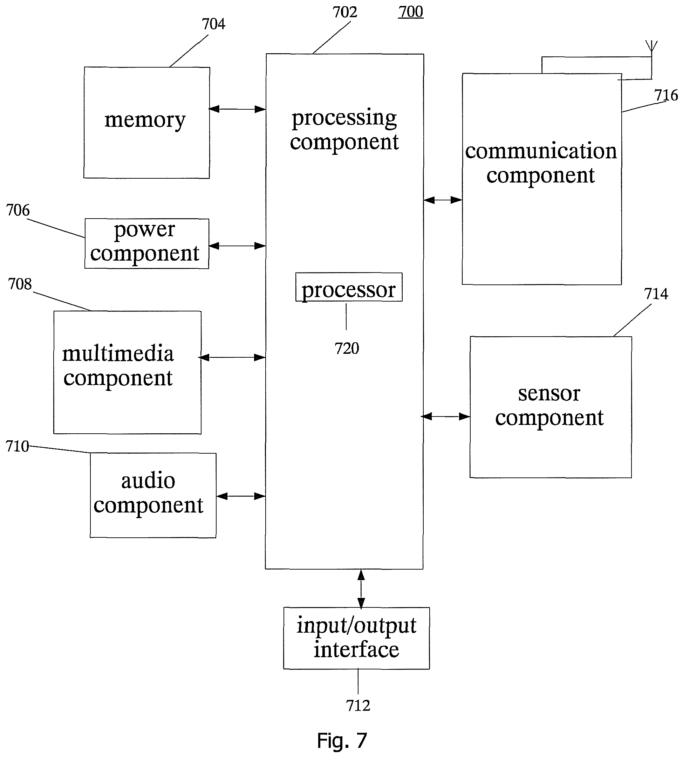

Fig. 7 is a block diagram showing a device 700 according to an illustrative embodiment of the present invention. For example, the device 700 may be a mobile phone, a computer, a digital broadcasting terminal, a message sending and receiving device, a game console, a flat panel device, a medical device, a fitness device, a personal digital assistant, or the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 typically controls overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module 708 to facilitate the interaction between the multimedia component 708 and the processing component 702.

The memory 704 is configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power in the device 700.

The multimedia component 708 includes a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have focus and optical zoom capability.

The audio component 710 is configured to output and/or input audio signals. For example, the audio component 710 includes a microphone (MIC) configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, such as a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components, e.g., the display and the keypad, of the device 700, a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of nearby objects without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 is configured to facilitate communication, wired or wirelessly, between the device 700 and other devices. The device 700 can access a wireless network based on a communication standard, such as WiFi, 2G, or 3G, or a combination thereof. In one exemplary embodiment, the communication component 716 receives a broadcast signal or broadcast associated a message from an external broadcast management system via a broadcast channel. In one exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In addition, the device 700 is further provided with a message indicator (not shown in Figs). In an illustrative embodiment, the message indicator is a blinking light or a flash light arranged on the device 700. The message indicator is used to emit a visual reminder to users. For example, the message indicator may be used to indicate a message such as a battery level, an incoming call, an incoming message, and a push notification. The message indicator may be arranged on a screen side of the device 700, or a non-screen side of the device 700. For example, the message indicator is arranged on a rear- or side-housing of the device 700. Alternatively, the message indicator is composed of LED.

In illustrative embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer-readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium having stored therein instructions that, when executed by a processor of the device 700, causes the device 700 to perform a method for controlling luminescence provided in embodiments as shown in Fig. 1, 2, 3, or 4.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling luminescence, **characterized in that** it comprises:
acquiring (102, 202, 302, 403) an environmental brightness;
determining (104, 404) a luminescence parameter of a message indicator arranged on a terminal based on the environmental brightness; and
controlling (106, 405) the message indicator to illuminate based on the luminescence parameter;
wherein the step of determining a luminescence parameter of a message indicator arranged on a terminal based on the environmental brightness comprises:
determining (204) a brightness of the message indicator based on the environmental brightness; and **characterized in that**
the step (204) of determining a brightness of the message indicator based on the environmental brightness comprises:
determining a screen brightness of the terminal based on the environmental brightness; and
determining the brightness of the message indicator based on the screen brightness,
wherein the screen brightness is in proportion with the brightness of the message indicator.

2. The method according to claim 1, wherein the step of determining a luminescence parameter of a message indicator arranged on a terminal based on the environmental brightness comprises:
determining (304) a color temperature of the message indicator based on the environmental brightness.

3. The method according to claim 2, wherein the step (304) of determining a color temperature of the message indicator based on the environmental brightness comprises:
determining a color temperature corresponding to the environmental brightness based on a first predetermined correspondence comprising a correspondence between the environmental brightness and the color temperature;
or
acquiring a brightness range of the environmental brightness; and
determining a color temperature corresponding to the brightness range based on a second predetermined correspondence comprising a correspondence between the brightness range and the color temperature.

4. The method according to claim 1, further comprising:
before controlling (106) the message indicator to illuminate based on the luminescence parameter, determining (401) whether the message indicator is in conformity with a predetermined luminescence condition, when a condition for triggering the message indicator to illuminate is met, wherein the condition for triggering the message indicator to illuminate are in accordance with a configuration requirement, and the predetermined luminescence condition refers to a predetermined condition allowing the message indicator to illuminate;
controlling (402) the message indicator not to illuminate when the message indicator is not in conformity with the predetermined luminescence condition; and
controlling (405) the message indicator to illuminate based on the luminescence parameter when the message indicator is in conformity with the predetermined luminescence condition.

5. The method according to claim 4, wherein determining (401) whether the message indicator is in conformity with the predetermined luminescence condition comprises at least one of following conditions:
determining whether the message indicator is blocked; and
determining whether a current moment when the condition for triggering the message indicator is met belongs to a predetermined luminescence period,
wherein the predetermined luminescence period refers to a predetermined period during which the message indicator is allowed to illuminate.

6. The method according to any one of claims 1 to 5, wherein the message indicator is a blinking light or a flash light arranged on the terminal.

7. A device for controlling luminescence, **characterized in that** it comprises:
a brightness acquiring module (510), configured to acquire an environmental brightness;
a parameter determining module (520), configured to determine a luminescence parameter of a message indicator arranged on a terminal based on the environmental brightness; and
a first control module (530), configured to control the message indicator to illuminate based on the luminescence parameter;
wherein the parameter determining module (520) comprises:
a brightness determining sub-module (520a), configured to determine a brightness of the message indicator based on the environmental brightness; **characterized in that**
the brightness determining sub-module (520a) comprises:
a first brightness determining sub-module (520a1), configured to determine a screen brightness of the terminal based on the environmental brightness; and
a second brightness determining sub-module (520a2), configured to determine the brightness of the message indicator based on the screen brightness,
wherein the screen brightness is in proportion with the brightness of the message indicator.

8. The device according to claim 7, wherein the parameter determining module (520) comprises:
a color temperature determining sub-module (520b), configured to determine a color temperature of the message indicator based on the environmental brightness.

9. The device according to claim 8, wherein the color temperature determining sub-module (520b) comprises:
a first color temperature determining sub-module (520b1), configured to determine a color temperature corresponding to the environmental brightness based on a first predetermined correspondence comprising a correspondence between the environmental brightness and the color temperature;
a brightness range acquiring sub-module (520b2), configured to acquire a brightness range of the environmental brightness; and
a second color temperature determining sub-module (520b3), configured to determine a color temperature corresponding to the brightness range based on a second predetermined correspondence comprising a correspondence between the brightness range and the color temperature.

10. The device according to claim 7, further comprising:
a condition determining module (522), configured to determine, before the message indicator is controlled to illuminate based on the luminescence parameter, whether the message indicator is in conformity with a predetermined luminescence condition, when a condition for triggering the message indicator to illuminate is met, wherein the condition for triggering the message indicator to illuminate are in accordance with a configuration requirement, and the predetermined luminescence condition refers to a predetermined condition allowing the message indicator to illuminate; and
a second control module (524), configured to control the message indicator not to illuminate when the message indicator is not in conformity with the predetermined luminescence condition;
wherein the first control module (530) is further configured to control the message indicator to illuminate based on the luminescence parameter when the message indicator is in conformity with the predetermined luminescence condition.

11. The device according to claim 10, wherein the condition determining module (522) is further configured to execute at least one of following conditions:
determining whether the message indicator is blocked; and
determining whether a current moment when the condition for triggering the message indicator is met belongs to a predetermined luminescence period,
wherein the predetermined luminescence period refers to a predetermined period during which the message indicator is allowed to illuminate.

## Patentansprüche

1. Verfahren zum Steuern von Lumineszenz, **dadurch gekennzeichnet, dass** es umfasst:
Erfassen (102, 202, 302, 403) einer Umgebungshelligkeit,
Bestimmen (104, 404) eines Lumineszenzparameters eines auf einem Endgerät angeordneten Meldungsindikators auf der Grundlage der Umgebungshelligkeit, und
Veranlassen (106, 405) des Meldungsindikators, auf der Grundlage des Lumineszenzparameters aufzuleuchten,
wobei der Schritt des Bestimmens eines Lumineszenzparameters eines auf einem Endgerät angeordneten Meldungsindikators auf der Grundlage der Umgebungshelligkeit umfasst:
Bestimmen (204) einer Helligkeit des Meldungsindikators auf der Grundlage der Umgebungshelligkeit, und
**dadurch gekennzeichnet, dass** der Schritt (204) des Bestimmens einer Helligkeit des Meldungsindikators auf der Grundlage der Umgebungshelligkeit umfasst:
Bestimmen einer Bildschirmhelligkeit des Endgerätes auf der Grundlage der Umgebungshelligkeit und
Bestimmen der Helligkeit des Meldungsindikators auf der Grundlage der Bildschirmhelligkeit,
wobei sich die Bildschirmhelligkeit proportional zur Helligkeit des Meldungsindikators verhält.

2. Verfahren nach Anspruch 1, wobei der Schritt des Bestimmens eines Lumineszenzparameters eines auf einem Endgerät angeordneten Meldungsindikators auf der Grundlage der Umgebungshelligkeit umfasst:
Bestimmen (304) einer Farbtemperatur des Meldungsindikators auf der Grundlage der Umgebungshelligkeit.

3. Verfahren nach Anspruch 2, wobei der Schritt (304) des Bestimmens einer Farbtemperatur des Meldungsindikators auf der Grundlage der Umgebungshelligkeit umfasst:
Bestimmen einer Farbtemperatur, die der Umgebungshelligkeit entspricht, auf der Grundlage einer ersten zuvor festgelegten Entsprechung, die eine Entsprechung zwischen der Umgebungshelligkeit und der Farbtemperatur umfasst,
oder
Erfassen eines Helligkeitsbereichs der Umgebungshelligkeit und
Bestimmen einer Farbtemperatur, die dem Helligkeitsbereich entspricht, auf der Grundlage einer zweiten zuvor festgelegten Entsprechung, die eine Entsprechung zwischen dem Helligkeitsbereich und der Farbtemperatur umfasst.

4. Verfahren nach Anspruch 1, ferner umfassend:
vor dem Veranlassen (106) des Meldungsindikators, auf der Grundlage des Lumineszenzparameters aufzuleuchten, Bestimmen (401), ob der Meldungsindikator eine zuvor festgelegte Lumineszenzbedingung erfüllt, wenn eine Bedingung zum Auslösen des Aufleuchtens des Meldungsindikators erfüllt ist, wobei die Bedingung zum Auslösen des Aufleuchtens des Meldungsindikators eine Konfigurationsanforderung erfüllt, und die zuvor festgelegte Lumineszenzbedingung sich auf eine zuvor festgelegte Bedingung bezieht, die es dem Meldungsindikator erlaubt, aufzuleuchten,
Veranlassen (402) des Meldungsindikators, nicht aufzuleuchten, wenn der Meldungsindikator die zuvor festgelegte Lumineszenzbedingung nicht erfüllt, und
Veranlassen (405) des Meldungsindikators, auf der Grundlage des Lumineszenzparameters aufzuleuchten, wenn der Meldungsindikator die zuvor festgelegte Lumineszenzbedingung erfüllt.

5. Verfahren nach Anspruch 4, wobei das Bestimmen (401), ob der Meldungsindikator die zuvor festgelegte Lumineszenzbedingung erfüllt, mindestens eine der folgenden Bedingungen umfasst:
Bestimmen, ob der Meldungsindikator gesperrt ist, und
Bestimmen, ob ein aktueller Moment, in dem die Bedingung für das Auslösen des Meldungsindikators erfüllt ist, zu einem zuvor festgelegten Lumineszenzzeitraum gehört,
wobei sich der zuvor festgelegte Lumineszenzzeitraum auf einen zuvor festgelegten Zeitraum bezieht, während dem der Meldungsindikator aufleuchten darf.

6. Verfahren nach einem der Ansprüche 1 bis 5, wobei der Meldungsindikator ein auf dem Endgerät angeordnetes Blinklicht oder Blitzlicht ist.

7. Vorrichtung zum Steuern von Lumineszenz, **dadurch gekennzeichnet, dass** sie umfasst:
ein Helligkeitserfassungsmodul (510), das zum Erfassen einer Umgebungshelligkeit konfiguriert ist,
ein Parameterbestimmungsmodul (520), das dafür konfiguriert ist, einen Lumineszenzparameter eines auf einem Endgerät angeordneten Meldungsindikators auf der Grundlage der Umgebungshelligkeit zu bestimmen, und
ein erstes Steuerungsmodul (530), das dafür konfiguriert ist, das Aufleuchten des Meldungsindikators auf der Grundlage des Lumineszenzparameters zu veranlassen,
wobei das Parameterbestimmungsmodul (520) umfasst:
ein Helligkeitsbestimmungs-Teilmodul (520a), das dafür konfiguriert ist, die Helligkeit des Meldungsindikators auf der Grundlage der Umgebungshelligkeit zu bestimmen,
**dadurch gekennzeichnet, dass** das Helligkeitsbestimmungs-Teilmodul (520a) umfasst:
ein erstes Helligkeitsbestimmungs-Teilmodul (520a1), das dafür konfiguriert ist, eine Bildschirmhelligkeit des Endgerätes auf der Grundlage der Umgebungshelligkeit zu bestimmen,
und ein zweites Helligkeitsbestimmungs-Teilmodul (520a2), das dafür konfiguriert ist, die Helligkeit des Meldungsindikators auf der Grundlage der Bildschirmhelligkeit zu bestimmen, wobei sich die Bildschirmhelligkeit proportional zur Helligkeit des Meldungsindikators verhält.

8. Vorrichtung nach Anspruch 7, wobei das Parameterbestimmungsmodul (520) umfasst:
ein Farbtemperaturbestimmungs-Teilmodul (520b), das dafür konfiguriert ist, eine Farbtemperatur des Meldungsindikators auf der Grundlage der Umgebungshelligkeit zu bestimmen.

9. Vorrichtung nach Anspruch 8, wobei das die Farbtemperaturbestimmungs-Teilmodul (520b) umfasst:
ein erstes Farbtemperaturbestimmungs-Teilmodul (520b1), das dafür konfiguriert ist, eine Farbtemperatur, die der Umgebungshelligkeit entspricht, auf der Grundlage einer ersten zuvor festgelegten Entsprechung zu bestimmen, die eine Entsprechung zwischen der Umgebungshelligkeit und der Farbtemperatur umfasst,
ein Helligkeitsbereichserfassungs-Teilmodul (520b2), das dafür konfiguriert ist, einen Helligkeitsbereich der Umgebungshelligkeit zu erfassen, und
ein zweites Farbtemperaturbestimmungs-Teilmodul (520b3), das dafür konfiguriert ist, eine Farbtemperatur, die dem Helligkeitsbereich entspricht, auf der Grundlage einer zweiten zuvor festgelegten Entsprechung zu bestimmen, die eine Entsprechung zwischen dem Helligkeitsbereich und der Farbtemperatur umfasst.

10. Vorrichtung nach Anspruch 7, die ferner umfasst:
ein Bedingungsbestimmungsmodul (522), das dafür konfiguriert ist, bevor der Meldungsindikator auf der Grundlage des Lumineszenzparameters veranlasst wird aufzuleuchten, zu bestimmen, ob der Meldungsindikator eine zuvor festgelegte Lumineszenzbedingung erfüllt, wenn eine Bedingung zum Auslösen des Aufleuchtens des Meldungsindikators erfüllt ist, wobei die Bedingung zum Auslösen des Aufleuchtens des Meldungsindikators eine Konfigurationsanforderung erfüllt, und die zuvor festgelegte Lumineszenzbedingung sich auf eine zuvor festgelegte Bedingung bezieht, die es dem Meldungsindikator erlaubt, aufzuleuchten, und
ein zweites Steuerungsmodul (524), das dafür konfiguriert ist, den Meldungsindikator zu veranlassen, nicht aufzuleuchten, wenn der Meldungsindikator die zuvor festgelegte Lumineszenzbedingung nicht erfüllt, und
wobei das erste Steuerungsmodul (530) ferner dafür konfiguriert ist, den Meldungsindikator auf der Grundlage des Lumineszenzparameters zu veranlassen aufzuleuchten, wenn der Meldungsindikator die zuvor festgelegte Lumineszenzbedingung erfüllt.

11. Vorrichtung nach Anspruch 10, wobei das Bedingungsbestimmungsmodul (522) ferner dafür konfiguriert ist, mindestens eine der folgenden Bedingungen auszuführen:
Bestimmen, ob der Meldungsindikator gesperrt ist, und
Bestimmen, ob ein aktueller Moment, in dem die Bedingung für das Auslösen des Meldungsindikators erfüllt ist, zu einem zuvor festgelegten Lumineszenzzeitraum gehört,
wobei sich der zuvor festgelegte Lumineszenzzeitraum auf einen zuvor festgelegten Zeitraum bezieht, während dem der Meldungsindikator aufleuchten darf.

## Revendications

1. Procédé de contrôle de luminescence, **caractérisé en ce qu'**il comprend :
l'acquisition (102, 202, 302, 403) d'une luminosité ambiante ;
la détermination (104, 404) d'un paramètre de luminescence d'un indicateur de message agencé sur un terminal en fonction de la luminosité ambiante ; et
le contrôle (106, 405) de l'éclairage de l'indicateur de message en fonction du paramètre de luminescence ;
dans lequel l'étape consistant à déterminer un paramètre de luminescence d'un indicateur de message agencé sur un terminal en fonction de la luminosité ambiante comprend :
la détermination (204) d'une luminosité de l'indicateur de message en fonction de la luminosité ambiante ; et
**caractérisé en ce que** l'étape (204) de détermination d'une luminosité de l'indicateur de message en fonction de la luminosité ambiante comprend :
la détermination d'une luminosité d'écran du terminal en fonction de la luminosité ambiante ; et
la détermination de la luminosité de l'indicateur de message en fonction de la luminosité d'écran,
dans lequel la luminosité d'écran est proportionnelle à la luminosité de l'indicateur de message.

2. Procédé selon la revendication 1, dans lequel l'étape de détermination d'un paramètre de luminescence d'un indicateur de message agencé sur un terminal en fonction de la luminosité ambiante comprend :
la détermination (304) d'une température de couleur de l'indicateur de message en fonction de la luminosité ambiante.

3. Procédé selon la revendication 2, dans lequel l'étape (304) de détermination d'une température de couleur de l'indicateur de message en fonction de la luminosité ambiante comprend :
la détermination d'une température de couleur correspondant à la luminosité ambiante en fonction d'une première correspondance prédéterminée comprenant une correspondance entre la luminosité ambiante et la température de couleur ;
ou
l'acquisition d'une plage de luminosité de la luminosité ambiante ; et
la détermination d'une température de couleur correspondant à la plage de luminosité en fonction d'une seconde correspondance prédéterminée comprenant une correspondance entre la plage de luminosité et la température de couleur.

4. Procédé selon la revendication 1, comprenant en outre :
avant le contrôle (106) de l'éclairage de l'indicateur de message en fonction du paramètre de luminescence, la détermination (401) de si l'indicateur de message est conforme à une condition de luminescence prédéterminée lorsqu'une condition pour déclencher l'éclairage de l'indicateur de message est satisfaite, dans lequel les conditions pour déclencher l'éclairage de l'indicateur de message sont conformes à des besoins de configuration, et la condition de luminescence prédéterminée se réfère à une condition prédéterminée permettant à l'indicateur de message de s'éclairer ;
le contrôle (402) du non-éclairage de l'indicateur de message lorsque l'indicateur de message n'est pas conforme à la condition de luminescence prédéterminée ; et
le contrôle (405) de l'éclairage de l'indicateur de message en fonction du paramètre de luminescence lorsque l'indicateur de message est conforme à la condition de luminescence prédéterminée.

5. Procédé selon la revendication 4, dans lequel la détermination (401) de si l'indicateur de message est conforme à la condition de luminescence prédéterminée comprend au moins l'une des conditions suivantes :
déterminer si l'indicateur de message est bloqué ; et
déterminer si un moment actuel, où la condition pour déclencher l'indicateur de message est satisfaite, se trouve dans une période de luminescence prédéterminée,
dans lequel la période de luminescence prédéterminée se réfère à une période prédéterminée durant laquelle l'indicateur de message est autorisé à s'éclairer.

6. Procédé selon l'une quelconque des revendications 1 à 5, dans lequel l'indicateur de message est une lumière clignotante ou une lumière flash agencée sur le terminal.

7. Dispositif de contrôle de luminescence, **caractérisé en ce qu'**il comprend :
un module d'acquisition de luminosité (510), configuré pour acquérir une luminosité ambiante ;
un module de détermination de paramètre (520), configuré pour déterminer un paramètre de luminescence d'un indicateur de message agencé sur un terminal en fonction de la luminosité ambiante ; et
un premier module de contrôle (530), configuré pour contrôler l'éclairage de l'indicateur de message en fonction du paramètre de luminescence ;
dans lequel le module de détermination de paramètre (520) comprend :
un sous-module de détermination de luminosité (520a), configuré pour déterminer une luminosité de l'indicateur de message en fonction de la luminosité ambiante ;
**caractérisé en ce que**
le sous-module de détermination de luminosité (520a) comprend :
un premier sous-module de détermination de luminosité (520a1), configuré pour déterminer une luminosité d'écran du terminal en fonction de la luminosité ambiante ; et
un second sous-module de détermination de luminosité (520a2), configuré pour déterminer la luminosité de l'indicateur de message en fonction de la luminosité d'écran,
dans lequel la luminosité d'écran est proportionnelle à la luminosité de l'indicateur de message.

8. Dispositif selon la revendication 7, dans lequel le module de détermination de paramètre (520) comprend :
un sous-module de détermination de température de couleur (520b), configuré pour déterminer une température de couleur de l'indicateur de message en fonction de la luminosité ambiante.

9. Dispositif selon la revendication 8, dans lequel le sous-module de détermination de température de couleur (520b) comprend :
un premier sous-module de détermination de température de couleur (520b1), configuré pour déterminer une température de couleur correspondant à la luminosité ambiante en fonction d'un première correspondance prédéterminée comprenant une correspondance entre la luminosité ambiante et la température de couleur ;
un sous-module d'acquisition de plage de luminosité (520b2), configuré pour acquérir une plage de luminosité de la luminosité ambiante ; et
un second sous-module de détermination de température de couleur (520b3), configuré pour déterminer une température de couleur correspondant à la plage de luminosité en fonction d'une seconde correspondance prédéterminée comprenant une correspondance entre la plage de luminosité et la température de couleur.

10. Dispositif selon la revendication 7, comprenant en outre :
un module de détermination de conditions (522), configuré pour déterminer, avant que l'indicateur de message ne soit contrôlé pour s'éclairer en fonction du paramètre de luminescence, si l'indicateur de message est conforme à une condition de luminescence prédéterminée lorsqu'une condition pour déclencher l'éclairage de l'indicateur de message est satisfaite, dans lequel les conditions pour déclencher l'éclairage de l'indicateur de message sont conformes à des besoins de configuration, et la condition de luminescence prédéterminée se réfère à une condition prédéterminée permettant à l'indicateur de message de s'éclairer ; et
un second module de contrôle (524), configuré pour contrôler le non-éclairage de l'indicateur de message lorsque l'indicateur de message n'est pas conforme à la condition de luminescence prédéterminée ;
dans lequel le premier module de contrôle (530) est configuré en outre pour contrôler l'éclairage de l'indicateur de message en fonction du paramètre de luminescence lorsque l'indicateur de message est conforme à la condition de luminescence prédéterminée.

11. Dispositif selon la revendication 10, dans lequel le module de détermination de conditions (522) est en outre configuré pour exécuter au moins l'une des conditions suivantes :
déterminer si l'indicateur de message est bloqué ; et
déterminer si un moment actuel, où la condition pour déclencher l'indicateur de message est satisfaite, se trouve dans une période de luminescence prédéterminée,
dans lequel la période de luminescence prédéterminée se réfère à une période prédéterminée durant laquelle l'indicateur de message est autorisé à s'éclairer.
